# EUROPEAN PATENT APPLICATION

(11) **EP 2 386 523 A1**
(43) Date of publication of application: **16.11.2011**
(21) Application number: 11164418.3
(22) Date of filing: 02.05.2011
(51) Int. Cl.: C01C 1/00, B01D 53/94, F01N 3/20

(54) **Ammonia supply device, ammonia supply method and exhaust gas purification system**

(30) Priority: 13.05.2010 JP 2010111335
(71) Applicant: Kabushiki Kaisha Toyota Jidoshokki, Kariya-shi, Aichi 448-8671 (JP)
(72) Inventor: Kawasaki, Shintaro, Kariya-shi, Aichi 448-8671 (JP); Imaoka, Ko, Kariya-shi, Aichi 448-8671 (JP)
(74) Representative: TBK

(57) **Abstract**

An ammonia supply device includes an ammonia absorber, a conductive element, a mixture, a tank and an electrode. The ammonia absorber is in powder or granular form. Ammonia is stored in the ammonia absorber and released from the ammonia absorber. The conductive element in paste or liquid form has a conductive property and a nonreactive property with ammonia. The mixture is made by mixing the ammonia absorber and the conductive element. The tank holds the mixture. The electrode includes a pair of first and second electrode elements for applying voltage to the mixture.

## Description

### BACKGROUND OF THE INVENTION

The present invention relates to an ammonia supply system and an ammonia supply method for supplying ammonia from an ammonia absorber, and an exhaust gas purification system using the same.

A NOx purification system has been generally used for reducing nitrogen oxides (NOx) contained in exhaust gas emitted from a combustion engine installed in a vehicle. Particularly, a NOx purification system for a diesel engine including a selective catalytic reduction catalyst (SCR catalyst) provided in an exhaust system of the engine has been used. According to the NOx purification system for a diesel engine, urea serving as a reducing agent is supplied to the SCR catalyst, and ammonia (NH₃) produced from the urea is absorbed and stored in the SCR catalyst to be used for selective reduction of NOx in exhaust gas.

A conventional method for supplying ammonia to the SCR catalyst by using an ammonia absorber storing ammonia serving as a reducing agent in a NOx purification system is disclosed in Japanese Unexamined Patent Application Publication (Translation of PCT Application) No. 2008-528431. The NOx purification system has a container having therein an ammonia absorber, a heater for heating the ammonia absorber, and an ammonia supply device for supplying ammonia gas produced by the heating to exhaust gas. The ammonia absorber is made of, for example, metal ammine salts such as a material made of high-density ammonia storage magnesium chloride (MgCl₂). The heater heats the container, helping NH₃ to be released from the ammonia absorber and supplied into exhaust gas through a supply valve.

According to the above-identified Publication, the container is heated by the heater, and the heat of the container is transferred to the ammonia absorber for heating. The thermal conductivity of the ammonia absorber is substantially low, so that it is difficult to heat the ammonia absorber in the container uniformly. Specifically, the heat of the container is easily transferred to the outer portion of the ammonia absorber that is in direct contact with the container, but hardly conducted to the core portion of the ammonia absorber that is away from the container. Thus, NH₃ stored in the outer portion of the ammonia absorber is easily released therefrom, but NH₃ stored in the core portion of the ammonia absorber is hardly released therefrom. Therefore, NH₃ stored in the ammonia absorber in the container is released unevenly and ineffectively. Supplying a larger electric power to the heater so that the heat is transferred to the core portion of the ammonia absorber away from the container with attempt to solve the above problem merely invites an increased power consumption.

The present invention is directed to providing an ammonia supply device and an ammonia supply method for supplying ammonia from an ammonia absorber effectively, and an exhaust gas purification system using the same.

### SUMMARY OF THE INVENTION

In accordance with the present invention, an ammonia supply device includes an ammonia absorber, a conductive element, a mixture, a tank and an electrode. The ammonia absorber is in powder or granular form. Ammonia is stored in the ammonia absorber and released from the ammonia absorber. The conductive element in paste or liquid form has a conductive property and a nonreactive property with ammonia. The mixture is made by mixing the ammonia absorber and the conductive element. The tank holds the mixture. The electrode includes a pair of first and second electrode elements for applying voltage to the mixture.

A method for discharging ammonia includes the steps of mixing an ammonia absorber in powder or granular form and storing ammonia being released with a conductive element in paste or liquid form and having a conductive property and a nonreactive property with ammonia to form a mixture, setting the mixture in a tank, and applying voltage to an electrode including a pair of electrode elements disposed in the tank such that current flows through the conductive element, the conductive element produces heat, the produced heat is transferred to the ammonia absorber to increase the temperature of the ammonia absorber, and the ammonia is released from the ammonia absorber.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing an exhaust gas purification system according to a first preferred embodiment of the present invention;
Fig. 2 is a flow chart showing a control of the exhaust gas purification system of Fig. 1;
Fig. 3 is a fragmentary partially enlarged view of an ammonia supply device of the exhaust gas purification system of Fig. 1;
Fig. 4A is a schematic view illustrating the operation of the ammonia supply device of Fig. 3;
Fig. 4B is a schematic view illustrating the operation of the ammonia supply device of Fig. 3;
Fig. 5 is a fragmentary partially enlarged view of an ammonia supply device of an exhaust gas purification system according to a second preferred embodiment of the present invention; and
Fig. 6 is a fragmentary partially enlarged view of an ammonia supply device of an exhaust gas purification system according to a third preferred embodiment of the present invention.

### DETAILED DESCRIPTION OF THE PREFERRED EMBODIMENTS

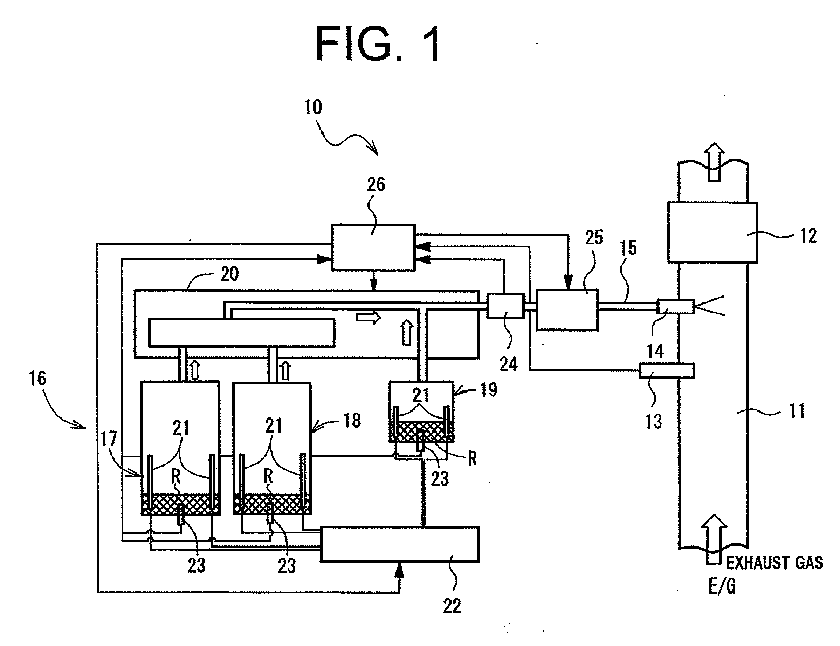

The following will describe an exhaust gas purification system according to a first preferred embodiment of the present invention with reference to Figs. 1 through 4. As shown in Fig. 1, the exhaust gas purification system designated generally by numeral 10 and used for removing harmful substances such as nitrogen oxides (NOx) contained in the exhaust gas emitted from a diesel engine (not shown) as an internal combustion engine is disposed in an exhaust gas passage 11 through which the exhaust gas passes. A selective catalytic reduction (SCR) catalyst 12 for providing selective reduction for NOx contained in the exhaust gas is also disposed in the exhaust gas passage 11. The SCR catalyst 12 is made of some substances, such as Fe zeolite which has ammonia absorption having relatively high NOx catalytic conversion efficiency at a relatively low temperature.

A nitrogen oxides sensor (NOx sensor) 13 is disposed in the exhaust gas passage 11 upstream of the SCR catalyst 12 with respect to the exhaust gas flowing direction in the exhaust gas passage 11 for detecting the amount of NOx contained in the exhaust gas. An injection nozzle 14 is disposed in the exhaust gas passage 11 upstream of the SCR catalyst 12 and connected to an ammonia supply device 16 through a supply pipe 15 for spraying ammonia into the exhaust gas passage 11.

The ammonia supply device 16 includes a first main tank 17, a second main tank 18 and a startup tank 19 which are connected to the supply pipe 15 respectively, and a tank selecting valve 20 is disposed in the supply pipe 15. A mixture R made by mixing an ammonia absorber P and a conductive paste Q added to the ammonia absorber P is held in the respective tanks 17, 18 and 19, and the electrode 21 including a pair of first and second electrode plates 21Aand 21 B is disposed in the respective tanks 17, 18 and 19 for applying voltage to the mixture R. The first and second electrode plates 21A and 21B serve as first and second electrode elements of the present invention. A control unit 22 is connected to the respective electrodes 21 in the tanks 17, 18 and 19 for controlling the switching of voltage application to the electrodes 21. The control unit 22 serves as a control device of the present invention. A thermometer 23 is disposed in the respective tanks 17, 18 and 19. The ammonia supply device 16 will be described in detail later.

A pressure sensor 24 is disposed in the supply pipe 15 for detecting the pressure of ammonia supplied from the ammonia supply device 16. A supply valve 25 is disposed in the supply pipe 15 upstream of the injection nozzle 14 with respect to the flowing direction of ammonia for adjusting the amount of ammonia supplied to the injection nozzle 14. The supply valve 25 is controlled to supply a predetermined amount of ammonia to the injection nozzle 14, so that the injection nozzle 14 injects the predetermined amount of ammonia to exhaust gas.

The electric control unit (ECU) 26 for controlling the operation of the exhaust gas purification system 10 is connected to the NOx sensor 13, the thermometer 23, the pressure sensor 24, the control unit 22, the tank selecting valve 20 and the supply valve 25. The ECU 26 serves as the control device of the present invention.

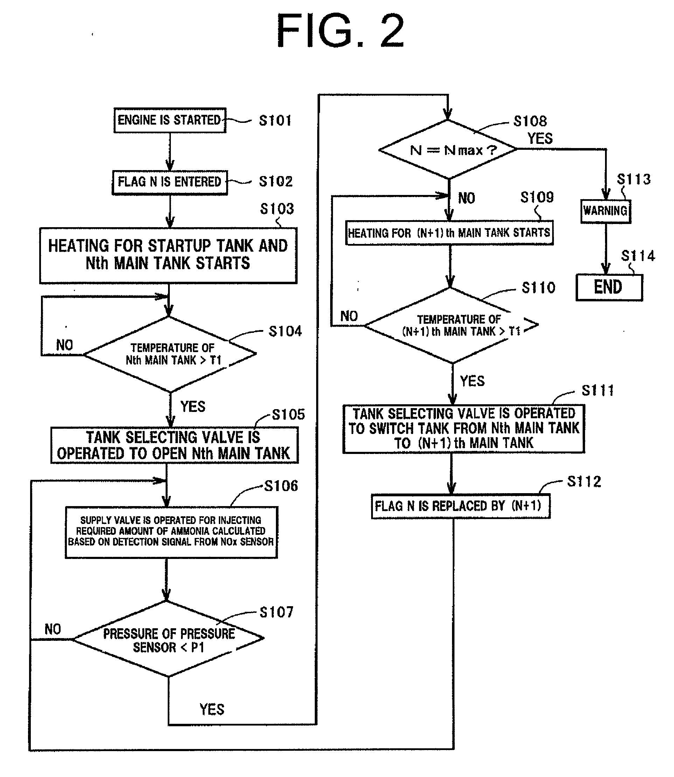

The following will describe a control flow performed by the ECU 26 by using a flow chart shown in Fig. 2. When the engine installed in a vehicle is started at the step S101, a flag N is entered at the S102. The flag N indicates the Nth main tank which is used for supplying ammonia. At the step S103, heating for the startup tank 19 and the Nth main tank starts. The Nth main tank serves as a target tank. The structure of the startup tank 19 is substantially the same as that of the first and second main tanks 17 and 18, but the volume of the startup tank 19 is smaller than that of the respective first and second main tanks 17 and 18 so that releasing ammonia from the startup tank 19 takes place immediately after the heating has started. The startup tank 19 supplies ammonia until the first and second main tanks 17 and 18 become ready to supply ammonia, thus functioning as a preliminary ammonia supplier.

At the step S104, it is determined whether or not the temperature of the Nth main tank detected by the thermometer 23 is higher than predetermined temperature T1. The predetermined temperature T1 is determined based on the temperature at which ammonia in the ammonia absorber P starts to be released for supply. The predetermined temperature T1 is determined also in view of the distribution and the shape of the mixture R, the location of the thermometer 23 and specific heat. If YES at the step S104, or if the temperature of the Nth main tank is increased to be higher than the predetermined temperature T1, the tank selecting valve 20 is operated to open the Nth main tank at the S105. Simultaneously, the heating of the startup tank 19 is stopped. If NO at the step S104, or if the temperature of the Nth main tank is increased but lower than the predetermined temperature T1, the control flow is returned to the step S104, and the step S104 is repeated until the temperature of the Nth main tank reaches the predetermined temperature T1.

At the step S106, the amount of ammonia required for reducing NOx contained in the exhaust gas is calculated based on a detection signal from the NOx sensor 13, and the supply valve 25 is operated for injecting the required amount of ammonia from the injection nozzle 14. The injection amount of ammonia is controlled by adjusting the time during which the supply valve 25 is opened. The ammonia injected into the exhaust gas from the injection nozzle 14 is absorbed in the SCR catalyst 12, and the selective reduction for NOx contained in exhaust gas is performed by the ammonia absorbed in the SCR catalyst 12.

At the step S107, it is determined whether or not the pressure detected by the pressure sensor 24 is decreased to be lower than a predetermined pressure P1. The predetermined pressure P1 is a pressure value serving as a target value of the present invention for determining whether the whole amount of ammonia stored in the main tank has been released. If YES at the step S107, or if the pressure detected from the pressure sensor 24 is lower than the predetermined pressure P1, the whole amount of ammonia stored in the Nth main tank is released, and at the next step S108 it is determined whether or not N is equal to Nmax. Nmax represents the number of the main tanks used in the exhaust gas purification system 10. If NO at the step S107, or if the pressure detected by the pressure sensor 24 is larger than the predetermined pressure P1, the control flow is returned to the step S106.

If YES at the step S108, or if N is equal to Nmax, it is determined that the whole amount of ammonia stored in the main tank is released therefrom and a warning signal is outputted at the step S913. Subsequently, the control flow is ended at the step S114, and the engine of the vehicle is stopped. In refilling the main tank with ammonia, the main tank is removed from the exhaust gas purification system 10. If NO at the step S108, or if N is not equal to Nmax, heating for the (N+1)th main tank starts at the step S109.

Subsequently, at the step S110, it is determined whether or not the temperature of the (N+1)th main tank detected by the thermometer 23 is higher than the predetermined temperature T1. If YES at the step S110, or if the temperature of the (N+1)th main tank is higher than the predetermined temperature T1, the tank selecting valve 20 is operated to switch the tank from the Nth main tank to the (N+1)th main tank. If NO at the step S110, or if the temperature of the (N+1)th main tank is lower than the predetermined temperature T1, the control flow is returned to the step S109 and the step S109 is repeated until the temperature of the (N+1)th main tank reaches the predetermined temperature T1. Subsequently, the value of N is replaced by the value of (N+1) at the step S112, and the flow of the control is returned to the step S106. Fig. 1 shows the exhaust gas purification system 10 having two main tanks, or the case in which Nmax is equal to two. The number of the main tanks is determined according to the engine displacement, and the number of the main tanks is increased with increasing engine displacement,

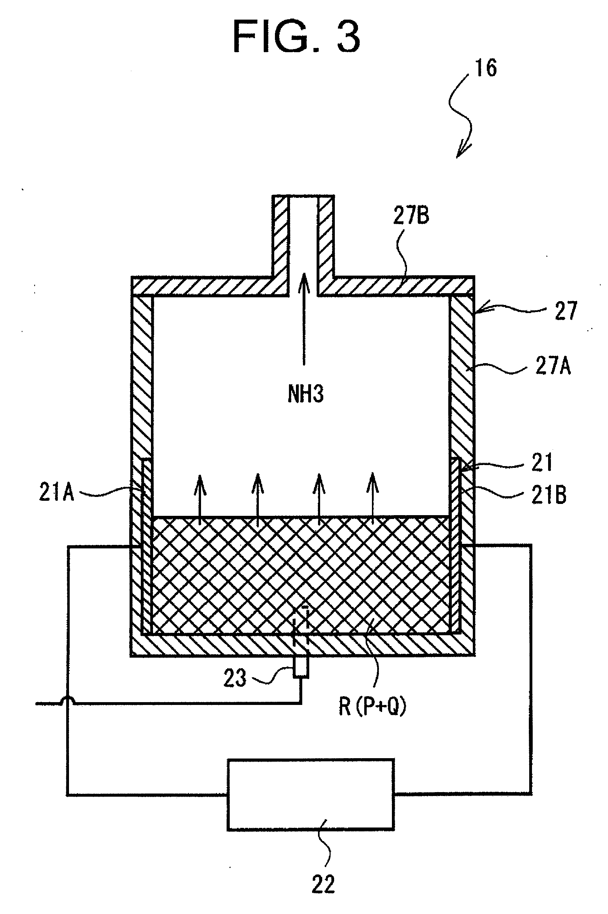

Referring to Fig. 3, the ammonia supply device 16 includes a container 27 holding therein the mixture R made by mixing the powder or granular ammonia absorber P and the conductive paste having conductive property and nonreactive with ammonia. The ammonia supply device 16 further includes the electrode 21 including the first and second electrode plates 21A and 21 B. The ammonia supply device 16 shown in Fig. 1 has the first main tank 17, the second main tank 18 and the startup tank 19 which have substantially the same structure as one another.

The ammonia absorber P is made, for example, of MgCl₂. The ammonia absorber P in either powder or granular form may be used. According to the first preferred embodiment of the present invention, the powder ammonia absorber P having granular diameter of about 200 mesh (about 75 µm) is used. In the case of MgCl₂, the ammonia store in the ammonia absorber P is released therefrom when the temperature of the ammonia absorber P is equal to or higher than 150 degrees Celsius under three to four atomospheres.

As the conductive paste Q, a silver paste or a carbon paste having a conductive property, but a high electric resistance and nonreactive property with ammonia is used. The conductive paste Q is added to and mixed with the ammonia absorber P, thus the mixture R being formed. The mixture R is put in a rectangular mold and shaped under a pressure into a molding in the form of a gel.

The container 27 has a rectangular horizontal cross-section and includes a main body 27A and a cover 27B having formed therethrough an outlet through which ammonia in the container is released. The container 27 is made of an insulating material. As shown in Fig. 3, the paired first and second electrode plates 21A and 21B of the electrode 21 are embedded in the opposite sidewalls of the main body 27A in facing relation to each other. The molding of the mixture R is set in the container 27 with the two opposite side surfaces of the molding set in contact with the first and second electrode plates 21 A and 21 B, respectively.

The first and second electrode plates 21A and 21 B are connected to the control unit 22, respectively, and a direct-current voltage (hereinafter referred to as "DC voltage") is applied between the first and second electrode plates 21A and 21 B, so that a current flows through the conductive paste Q, which then serves as an electrical resistance heating element for producing heat. The produced heat is transferred to the ammonia absorber P, so that the ammonia absorber P is heated and the ammonia stored in the ammonia absorber P is released therefrom. DC voltage for application between the first and second electrode plates 21A and 21 B may be replaced by an alternative-current voltage. In the case where the exhaust gas purification system 10 is installed in a vehicle using a battery that supplies DC voltage, an electric power control device for use with the exhaust gas purification system 10 may be simplified.

The following will describe an ammonia supply method performed by using the ammonia supply device 16. The conductive paste Q is added to the ammonia absorber P and mixed therewith, uniformly. The conductive paste Q functions as a binder for binding the particles of the ammonia absorber P. Such a proper amount of the conductive paste Q is added to and mixed with the ammonia absorber P that the surfaces of the particles of the ammonia absorber P are just covered and wetted with the conductive paste Q.

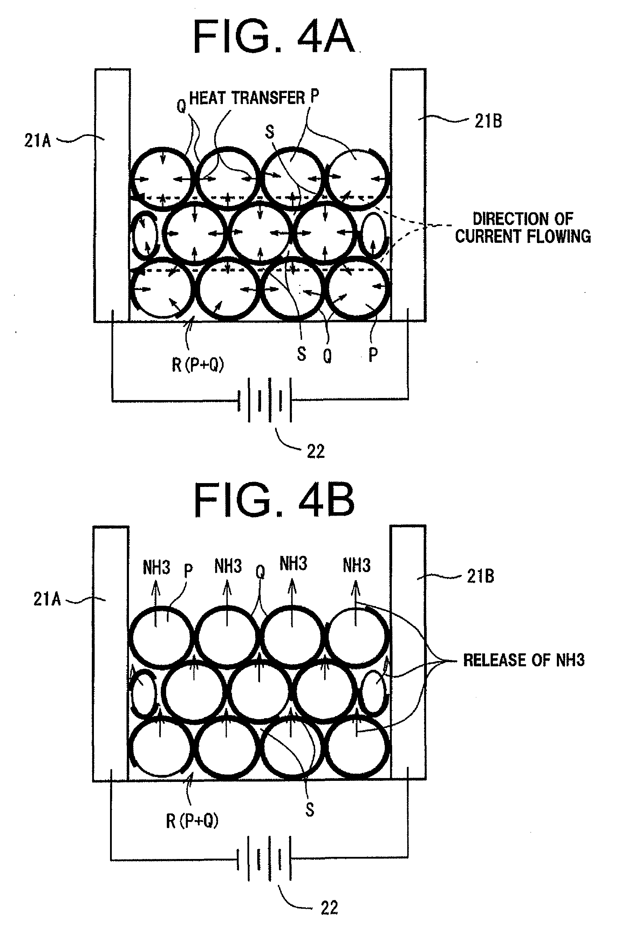

The mixture R formed by the conductive paste Q and the ammonia absorber P is put in a rectangular mold and shaped under a pressure into a molding. A molding with any desired shape may be made by changing the shape of the mold. The mixture R which is formed by adding the conductive paste Q to the ammonia absorber P is easily formed to any desired shape and absorbs any stress caused in the mixture R, so that the mixture R is prevented from being cracked by any shock applied thereto. If the mixture R is formed of only the ammonia absorber P without adding the conductive paste Q, the resulting molding of the mixture R is easily cracked by a shock of impact. Referring to Figs. 4A and 4B showing the mixture R in an enlarged cross-section, spaces between the particles are not fully filled with the conductive paste Q, but small spaces S are formed between the particles of the ammonia absorber P.

The molding of the mixture R is put in the container 27 from above with the cover 27B of the container removed. The molding is formed in such a size that the molding set in the container 27 can keep in contact with the first and second electrode plates 2 1 A and 21 B disposed in the container 27.

DC voltage from the control unit 22 is applied between the first and second electrode plates 21A and 21 B, and a current flows through the conductive paste Q, so that the conductive paste Q as the electrical resistance heating element produces heat. The conductive paste Q functions as a resistance member conducting between the first and second electrode plates 21A and 21B, as well as a binder for binding the particles of the ammonia absorber P. The conductive paste Q having a conductive property and a high electrical resistance produces heat as the electrical resistance heating element when a current flows through the conductive paste Q.

Then, the heat produced in the conductive paste Q is transferred to the ammonia absorber P, and the ammonia absorber P is heated, thereby allowing the ammonia stored in the ammonia absorber P to be released. According to the first preferred embodiment of the present invention in which the ammonia absorber P is made mainly of MgCl₂, the ammonia stored in the ammonia absorber P is released therefrom when the ammonia absorber P is heated to a temperature higher than 150 degrees Celsius.

The following will describe the operation of the ammonia supply device 16 constructed as described above with reference to Fig. 4. The size and shape of each particle of the ammonia absorber P are exaggerated in the illustration in Figs. 4A and 4B. As shown in Fig. 4A, the conductive paste Q covers the entire or part of the surfaces of the respective particles of the ammonia absorber P, and the particles of the ammonia absorber P are bound to one another through the conductive paste Q. The portions of the conductive paste Q which are attached to the particles of the ammonia absorber P are continuous with one another thereby to form a conducting circuit between the first and second electrode plates 21A and 21 B. Due to the addition of such an amount of the conductive paste Q to the ammonia absorber P that the surfaces of the particles of the ammonia absorber P are just covered and wetted with the conductive paste Q, small spaces S are formed between the particles of the ammonia absorber P.

The conductive paste Q attached to the particles of the ammonia absorber P is shown by bold line in Fig. 4A. The layers of the conductive paste Q on the respective ammonia absorber particles are continuous with each other thereby to form a conducting circuit of a zigzag form. The spaces S are formed between the particles, as shown in Fig. 4A. Thus, when DC voltage is applied between the electrode plates 21A and 21 B, a current flows through the conducting circuit formed by the conductive paste Q. The conductive paste Q having a conductive property and a high electrical resistance produces heat as the electrical resistance heating element when the current flows through the conductive paste Q.

The heat produced in the conductive paste Q is transferred to the particles of the ammonia absorber P, which are then heated. Since the conductive paste Q is distributed between the particles of the ammonia absorber P, the heat produced in the conductive paste Q is directly transferred to the particles of the ammonia absorber P in the container 27. The heat being transferred from the conductive paste Q to the ammonia absorber P is shown by arrows in Fig. 4A.

When the particles of the ammonia absorber P heated to 150 degrees Celsius or higher, ammonia stored in the ammonia absorber P is released therefrom. The conductive paste Q attached to the surfaces of the particles of the ammonia absorber P covers the surface of the particles in such a way that the spaces S are formed between the particles, so that ammonia released from the ammonia absorber P and having relatively high temperature and high pressure passed through the conductive paste Q while breaking the conductive paste Q. The released ammonia passes through the spaces S and flows toward the top of the container 27. The ammonia being released from the ammonia absorber P through the conductive paste Q are shown by arrows in Fig. 4B.

Since the ammonia stored in the particles of the ammonia absorber P is released from each particle, uneven releasing of ammonia as in the case of the conventional ammonia supply device is prevented and ammonia stored in the ammonia absorber P may be released uniformly and effectively.

The ammonia supply device 16 and the exhaust gas purification system 10 using the same according to the first preferred embodiment of the present invention have the following advantageous effects.
(1) The ammonia supply device 16 has the container 27 holding therein the mixture R made of the ammonia absorber P stored therein ammonia and the conductive paste Q added to and mixed with the ammonia absorber P and nonreacted with ammonia and further the electrode 21 including a pair of the first and second electrode plates 21A and 21 B for applying voltage to the mixture R in the container 27. DC voltage is applied to the electrode 21 and a current flows through the conductive paste Q, accordingly, so that the conductive paste Q as the electrical resistance heating element produces heat. The produced heat is transferred to the ammonia absorber P, so that the ammonia stored in the ammonia absorber P is released therefrom. Since the ammonia absorber P is mixed with the conductive paste Q, the heat produced in the conductive paste Q is directly transferred to the ammonia absorber P in the container 27. Thus, ammonia stored in the ammonia absorber P may be released therefrom effectively.
(2) Such an amount of the conductive paste Q is added to the ammonia absorber P that the conductive paste Q attached to the surfaces of the particles of the ammonia absorber P covers the surfaces of the particles and also that spaces S are formed between the particles. Thus, when the particles of the ammonia absorber P are heated, ammonia of high temperature and high pressure is released from the ammonia absorber P, flowing through the spaces S formed between the particles toward the top of the container 27.
(3) According to the ammonia supply device 16 of the first preferred embodiment, DC voltage is applied to the mixture R made of the ammonia absorber P and the conductive paste Q, and a current flows through the conductive paste Q, accordingly, so that the conductive paste Q produces heat, and the ammonia absorber P is heated directly by the produced heat. Thus, the power consumption of the ammonia supply device 16 may be reduced in comparison with the conventional ammonia supply device using a heater for heating the ammonia absorber.
(4) According to the ammonia supply device 16 of the first preferred embodiment, the mixture R made of the ammonia absorber P and the conductive paste Q is put in a rectangular mold and shaped under a pressure into a molding, and the molding is set in the container and voltage is applied to the mixture R in the container 27. Thus, the mixture R may be made easily into any desired shape and absorb any stress produced therein. Therefore, the mixture R is prevented from being cracked by application of any shock of impact.
(5) The ECU 26 that controls the operation of the exhaust gas purification system 10 determines that ammonia stored in the first main tank 17 is completely released when the pressure of ammonia being released and detected by the pressure sensor 24 is lower than a predetermined pressure P1 and then switches the tank operation from the first main tank 17 to the second main tank 18. Thus, downtime of the exhaust gas purification system 10 due to the tank switching operation may be reduced significantly.
(6) Furthermore, the ECU 26 calculates the amount of ammonia required for reduction of NOx contained in the exhaust gas based on a detection signal of NOx sensor 13 and controls the operation of the supply valve 25 for injecting the calculated amount of ammonia from the injection nozzle 14. Thus, according to the exhaust gas purification system 10 of the first preferred embodiment, no extra ammonia is injected into exhaust gas and, therefore, NOx purification is performed economically.

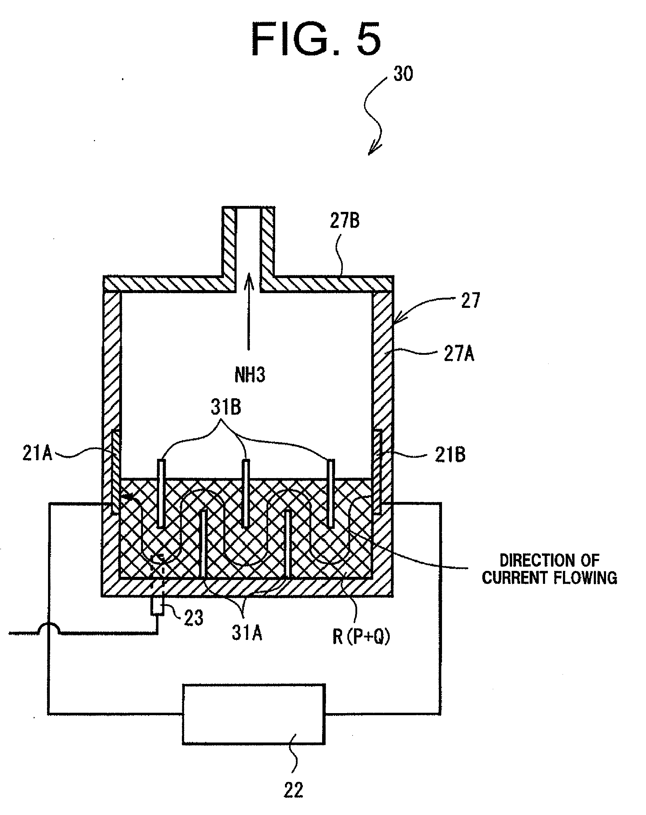

The following will describe an ammonia supply device 30 according to a second preferred embodiment of the present invention with reference to Fig. 5. The second preferred embodiment differs from the first preferred embodiment in the structure of the container 27. The rest of the structure of the ammonia supply device 30 is substantially the same as that of the first embodiment. Therefore, common or similar elements or parts are designated by the same reference numerals as those used in the first embodiment and the description thereof will be omitted, and only the modifications will be described.

A plurality of shield plates 31 each having insulation property is disposed in the container 27. As shown in Fig. 5, the shield plates 31 include first shield plates 31A and second shield plates 31B. The first shield plates 31A and the second shield plates 31 B are arranged alternately in parallel relation to the first and second electrode plates 21A and 21 B. Each first shield plate 31A is provided upright on the bottom of the container 27 and each second shield plate 31 B is provided with the upper portion thereof projecting upward from the top surface of the mixture R. The first and second shield plates 31A and 31B are provided alternately and spaced apart at a predetermined interval. As shown in clearly in Fig. 5, the shield plates 31 are arranged in such a way that the upper part of the first shield plates 31 A and the lower part of the second shield plates 31 B overlap each other.

In the case that no first and second shield plates 31A and 31 B are present in the container 27, when DC voltage is applied to the electrode 21, the distribution of electric current in the conducting circuit of the conductive paste Q is concentrated along the shortest path extending straight between the first and second electrode plate 21A and 21B. Thus, current may not be distributed uniformly in the mixture R in the container 27. However, the provision of the first and second shield plates 31A and 31B causes the current to flow around the first and second shield plates 31A and 31 B along zigzag or labyrinth-like paths, as shown in Fig. 5. Thus, the current flows throughout the mixture R in the container 27 and, therefore, ammonia stored in the ammonia absorber P may be released therefrom, effectively. The second preferred embodiment has advantageous effects that are similar to the effects (1) through (6) of the first preferred embodiment.

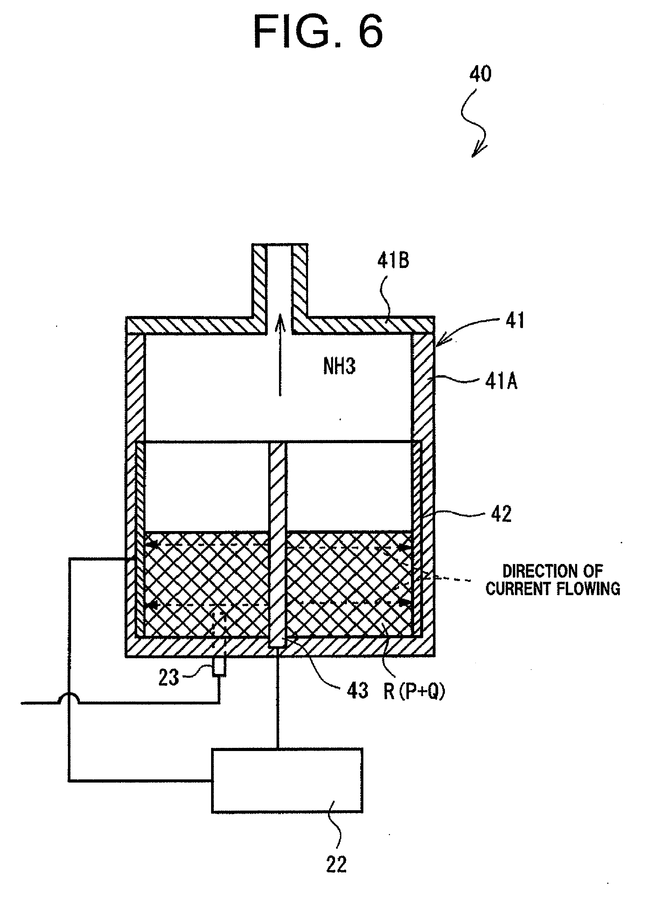

The following will describe an ammonia supply device 40 according to a third preferred embodiment of the present invention with reference to Fig. 6. The third preferred embodiment differs from the first preferred embodiment in the shape of the container 27 and the electrode 21. The rest of the structure of the ammonia supply device 40 is substantially the same as that of the first embodiment. Therefore, common or similar elements or parts are designated by the same reference numerals as those used in the first embodiment and the description thereof will be omitted and only the modifications will be described.

The container 41 has a cylinder shape and includes a main body 41A and a cover 41 B having formed therethrough an outlet through which ammonia is released. The container 41 is made of an insulating material. A peripheral electrode element 42 serving as the first electrode element is embedded in the lower inner peripheral wall of the main body 41A. A center electrode element 43 having rod-like shape and serving as the second electrode element is disposed upstanding with its bottom end fixed in the bottom of the main body 41A. The peripheral electrode element 42 and the center electrode element 43 cooperate to form an electrode.

The molding formed of the mixture R is set in the container 41. According to the third preferred embodiment of the present invention, the molding of mixture R is formed into a cylindrical shape with an axial hole extending through the mixture R for receiving therein the center electrode element 43. The molding is set in the container 41 such that the center electrode element 43 is inserted through the axial hole of the molding and the peripheral electrode element 42 is in contact with the outer peripheral surface of the molding.

When the DC voltage is applied between the peripheral electrode element 42 and the center electrode element 43, the conducting circuit formed by the conductive paste Q is formed extending radially from the center electrode element 43 toward the peripheral electrode element 42. Thus, the current flows uniformly throughout the mixture R in the container 27, so that ammonia stored in the ammonia absorber P is released therefrom, effectively. The third preferred embodiment has advantageous effects that are similar to those of the first preferred embodiment.

The present invention is not limited to the embodiments described above, but it may be modified into alternative embodiments as exemplified below.

According to the first through third preferred embodiments of the present invention, the ammonia absorber P is made of MgCl₂. Alternatively, the ammonia absorber P may be made of strontium chloride (SrCl₂) or calcium chloride (CaCl₂) instead of MgCl₂. In the case of SrCl₂, the ammonia stored in the ammonia absorber P is released therefrom when the temperature of the ammonia absorber P is higher than 80 degrees Celsius under three to four atmospheres.

According to the first through third preferred embodiment of the present invention, silver paste or a carbon paste is used as the conductive paste Q as an additive to the ammonia absorber P. Alternatively, the conductive paste Q may be of a liquid and for example, an ionic liquid having a conductive property and nonreactive property with ammonia. According to the first through third preferred embodiments of the present invention, a molding of the mixture R is used. Alternatively, the mixture may be inserted into the container without forming a molding.

Just after the staring up, voltage applied to the electrode may be set at a higher level for promoting the heating of the ammonia absorber P. In this case, when the temperature of the ammonia absorber P becomes higher than a predetermined temperature, for example, 150 degrees Celsius, the voltage may be lowered. According to this operation, the time before the ammonia stored in the ammonia absorber P starts to be released may be shortened.

According to the exhaust gas purification system 10 of the first preferred embodiment of the present invention, the startup tank 19 is always opened. Alternatively, a switching valve may be provided to selectively open and close the startup tank 19, or the startup tank 19 per se may be omitted.

According to the exhaust gas purification system 10 of the first preferred embodiment of the present invention, the thermometer 23 is operable to detect the temperature of the mixture R. Alternatively, the thermometer 23 may be configured so as to detect the temperature of ammonia gas contained in the tanks or a pressure sensor may be provided in the respective tanks 17, 18 and 19 for detecting the pressures thereof. By so doing, the amount of the ammonia gas released form the ammonia absorbers P placed in the tanks 17, 18 and 19 is determined by using the pressure or both of the pressure and temperature of the tanks 17, 18 and 19.

An ammonia supply device includes an ammonia absorber, a conductive element, a mixture, a tank and an electrode. The ammonia absorber is in powder or granular form. Ammonia is stored in the ammonia absorber and released from the ammonia absorber. The conductive element in paste or liquid form has a conductive property and a nonreactive property with ammonia. The mixture is made by mixing the ammonia absorber and the conductive element. The tank holds the mixture. The electrode includes a pair of first and second electrode elements for applying voltage to the mixture.

## Claims

1. An ammonia supply device (16, 30, 40) comprising:
an ammonia absorber (P) in powder or granular form for storing ammonia in the ammonia absorber (P) being released;
a conductive element (Q) in paste or liquid form having a conductive property and a nonreactive property with ammonia;
a mixture (R) made by mixing the ammonia absorber (P) and the conductive element (Q);
a tank (17,18,19) holding the mixture (R); and
an electrode (21) including a pair of a first electrode element (21A, 42) and a second electrode element (21 B, 43) for applying voltage to the mixture (R).

2. The ammonia supply device (16, 30, 40) according to claim 1, **characterized in that** the ammonia absorber (P) is made of magnesium chloride, and conductive element (Q) is made of silver or carbon.

3. The ammonia supply device (16, 30) according to claim 1, **characterized in that** the first electrode element (21A) and the second electrode element (21B) each having a plate-like shape are embedded in the opposite sidewalls of the tank (27), respectively, and in facing relation to each other.

4. The ammonia supply device (30) according to claim 1, **characterized in that** a plurality of shield plates (31) including first shield plates (31A) and second shield plates (31B) is disposed in the tank (27), each first shield plate (31A) is provided upright on the bottom of the tank (27) and each second shield plate (31B) is provided with the upper portion of the second shield plate (31B) projecting upward from the top surface of the mixture (R), and the first shield plates (31A) and the second shield plates (31B) are arranged alternately in parallel relation to the first and second electrode elements (21A, 21 B) each having a plate-like shape so as to be spaced apart at a predetermined interval and such that the upper part of the first shield plates (31A) and the lower part of the second shield plates (31 B) overlap each other.

5. The ammonia supply device (40) according to claim 1, **characterized in that** the first electrode element (42) has a cylindrical shape and is embedded in the inner peripheral wall of the tank (41), and the second electrode element (43) has a rod-like shape and is disposed upstanding with the bottom end of the second electrode element (43) fixed in the bottom of the tank (41).

6. An exhaust gas purification system (10) including the ammonia supply device (16, 30, 40) according to any one of claims 1 through 5 comprising:
an exhaust gas passage (11) through which exhaust gas passes;
a selective catalytic reduction catalyst (12) disposed in the exhaust gas passage (11);
a nitrogen oxides sensor (13) disposed in the exhaust gas passage (11) upstream of the selective catalytic reduction catalyst (12) for detecting the amount of nitrogen oxides contained in the exhaust gas;
an injection nozzle (14) disposed in the exhaust gas passage (11) upstream of the selective catalytic reduction catalyst (12) for spraying ammonia into the exhaust gas passage (11);
a supply pipe (15) connecting the injection nozzle (14) to the ammonia supply device (16, 30, 40);
a pressure sensor (24) disposed in the supply pipe (15) for detecting a pressure of ammonia supplied from the ammonia supply device (16, 30,40);
a supply valve (25) disposed in the supply pipe (15) for adjusting the amount of ammonia supplied to the injection nozzle (14), and
a control device (22, 26) controlling the operation of the exhaust gas purification system (10) such that voltage is applied to the electrode (21, 42, 43) for releasing ammonia from the ammonia supply device (16, 30, 40) based on the pressure of ammonia detected by the pressure sensor (24), and an amount of ammonia required for reducing nitrogen oxides is calculated based on a detection signal from the nitrogen oxides sensor (13) and the supply valve (25) is operated for injecting the required amount of ammonia from the injection nozzle (14).

7. The exhaust gas purification system (10) according to claim 6, **characterized in that** a plurality of the tanks (27, 41) is provided, a tank selecting valve (20) is disposed in the supply pipe (15) for switching a tank operation, the control device (22, 26) controls the tank selecting valve (20) for switching the tank operation to a target tank and switching the tank operation from one tank to another tank when the pressure of ammonia detected by the pressure sensor is lower than a predetermined value (P1).

8. A method for discharging ammonia **characterized by** the steps of:
mixing an ammonia absorber (P) in powder or granular form for storing ammonia being released and a conductive element (Q) in paste or liquid form having a conductive property and a nonreactive property with ammonia to form a mixture (R);
setting the mixture (R) in a tank (27,41);
applying voltage to an electrode (21, 42, 43) including a pair of electrode elements (21A, 21 B, 42, 43) disposed in the tank (27,41) such that current flows through the conductive element (Q), the conductive element (Q) produces heat, the produced heat is transferred to the ammonia absorber (P) to increase the temperature of the ammonia absorber (P), and the ammonia is released from the ammonia absorber (P).
